# EUROPEAN PATENT APPLICATION

(11) **EP 2 827 101 A1**
(43) Date of publication of application: **21.01.2015**
(21) Application number: 13290169.5
(22) Date of filing: 18.07.2013
(51) Int. Cl.: G01C 21/16, G01C 21/20, G01C 21/06, G01C 21/00

(54) **Method for determing a position of a tracking device**

(71) Applicant: Astrium GmbH, 82024 Taufkirchen (DE)
(72) Inventor: De Witte, Eric, EN5 5EQ Barnet (GB); Schäfer, Christof Dr., 85551 Kirchheim (DE); Gnata, Xavier Dr., 82024 Taufkirchen (DE); Stoliaroff, Dimitri, 75013 Paris (FR); Hoch, Uwe, 09355 Gersdorf (DE); Kronmüller, Harald, Oberweissach (DE); Carpy, Rodrigo, 78462 Konstanz (DE)
(74) Representative: Häußler, Henrik

(57) **Abstract**

The invention relates to a method for determining an indoor position of a tracking device. The method uses a Heuristic Drift Elimination (HDE) algorithm which is modified by using additional knowledge about the indoor environment. The additional knowledge is in the form of so-called "local dominant direction domains" which are automatically extracted from floorplans. Using local dominant direction domain allows improving the performance of the HDE algorithm where additional knowledge is available, while reverting to the standard HDE algorithm where it is not.

## Description

The invention relates to a method for determining an indoor position of a tracking device.

Inertial indoor navigation works by processing the signals from an inertial measurement unit (IMU), which can, for instance, be embedded in the heel of a boot. The IMU contains accelerometers that measure accelerations along three orthogonal directions, and gyroscopes (so called gyros) that measure the rate of turn around those three directions. Using dead-reckoning calculations, the position changes of the IMU can be tracked with respect to the last known position which can be determined from a satellite based navigation system for instance. Since the calculations involve a double integration, small errors are accumulated into a large drift of the output signal, and the position error grows without bound.

Errors accrue from both the accelerometers and the gyros. The drift due to the errors from the accelerometers can be eliminated by performing so-called zero-velocity updates (ZUPTs). The ZUPTs work on the principle that for every footfall there is a short period of time where the velocity is zero. By detecting when that period occurs, the knowledge of zero velocity can be used to correct the drift from the accelerometers. Using this technique, position errors can be limited to around 2% of the travelled distance. As an example, this method can be read from "Personal Dead-reckoning System for GPS-denied Environments" IEEE International Workshop on Safety, Security, and Rescue Robotics (SSRR2007) Rome, Italy, September 27-29, 2007.

Even with ZUPTs, the position accuracy that can be obtained from inertial dead reckoning is limited due to the drift of the gyros. To overcome the problem of gyro drift, the Heuristic Drift Elimination (HDE) was proposed by Borenstein et. al., which is, for example disclosed in US 2011/0087450 A1 and WO2010/114915 A2 as well as the publication "Heuristic Drift Elimination for Personnel Tracking Systems", THE JOURNAL OF NAVIGATION (2010), 63, 591-606. The HDE algorithm is used to eliminate slow drift errors from the signal of a virtual gyroscope, which outputs the rate of turn around the local vertical axis for every step taken. The algorithm suffers from the following shortcomings:
1) A system using the proposed HDE algorithm needs to learn the principle directions prior to its use, which requires a calibration method that may not be compatible with operational demands.
2) The calibration of a system using the proposed HDE algorithm is not robust since the algorithm is sensitive to errors made during calibration.
3) A system using the proposed HDE algorithm cannot adapt to dominant directions that deviate from those that have been set up, for example, for a building during calibration.
4) Walking along non-dominant directions must be detected in order to avoid introducing heading errors.
5) Extended walking along non-dominant directions (searching a room in the building for instance) may introduce heading errors that cause a large non-recoverable heading error, which causes the system to fail dramatically.

It is therefore an object of the present invention to provide a method for determining a position of a tracking device which is functionally improved.

This object is solved by a method according to claim 1. Preferred embodiments are set out in the dependent claims.

According to the invention, a method for determining a position of a tracking device, comprises the following steps: receiving measurements from a sensor assembly of the tracking device at a controller of the tracking device, the sensor assembly comprising a gyroscopic device (gyro) to measure a rate of rotation of the tracking device and an accelerometer to measure an acceleration in at least one of perpendicular directions; determining, using the controller, an indication of a direction of travel of the tracking device based on the measurements from the sensor assembly; supplying the indication of the direction of travel to a closed loop feedback control of the controller that is to remove a drift error from the indication of the direction of travel of the tracking device and that is to map the indication of the previous direction of travel onto one of a plurality of dominant directions to form a mapped indication of the previous direction of travel; an absolute position calculator within the closed loop feedback control calculating an updated absolute position of the tracking device based on the drift corrected direction of the tracking device and a last estimated position based on the measurement of the accelerometer, wherein based on the updated absolute position a local dominant direction is looked-up; a comparator within the closed loop feedback control selecting the dominant direction that is closest to the drift corrected indication of the direction of travel of the tracking device to form the mapped indication of the previous direction of travel; an accumulator within the closed loop feedback control accumulating error values corresponding to a difference between the mapped indication of the previous direction of travel and a baseline direction of travel; the closed loop feedback control producing an integrator signal that counteracts the effects of drift error within the indication of the direction of travel, wherein the drift error is a normalized drift error that has had static drift error removed; and correcting the indication of the direction of travel by applying the integrator signal to the indication of the direction of travel to produce a corrected indication of the direction of travel.

The method according to the invention is based on the known HDE algorithm which aims to reduce the gyro drift in an indoor navigation system. According to the invention, the known HDE algorithm is improved by determining the dominant direction by assessing a local dominant direction as a function of a last position estimate. The "local dominant direction domains" are used as additional knowledge. Instead of setting up the dominant directions for once and for all, the algorithm uses ad-hoc dominant directions that are a function of its last position estimate.

According to a preferred embodiment the updated absolute position is used to look-up a gain function which represents a likelihood by which traveling along dominant directions in the current location will occur.

According to a further preferred embodiment the comparator selects the dominant direction that is closest in terms of angular distance to the drift corrected estimated direction of travel.

According to a further preferred embodiment the comparator calculates an angular difference between the estimated direction of travel and the selected dominant direction which is fed to a binary controller which will increment or decrement a corrective term in a next loop of calculation, depending on the sign of the angular difference.

According to a further preferred embodiment the size of the increment or decrement is set by the gain lookup function.

According to a further preferred embodiment the local dominant direction is extracted from a run length encoded map of indexed domains. The map may be in the form of a floor plan of a building.

According to a further preferred embodiment a determined position is decoded into an index which in turn is a pointer into a storage that returns the local dominant directions. According to a further preferred embodiment a determined position is decoded into an index which in turn is a pointer into a storage that returns the gain. The storage may be a table. The relationship between a position and its dominant directions and gains may be collected beforehand.

That means, all positions within a certain domain are allocated a set of local dominant directions. For instance in a typical corridor, the two local dominant directions will be 180 degree apart. In the middle of a room, there are no dominant directions, and the algorithm will not track a dominant direction.

The local dominant direction domains can be automatically extracted from floor plans. This allows improving the performance of the HDE algorithm where additional knowledge is available, while reverting to the standard HDE algorithm where it is not.

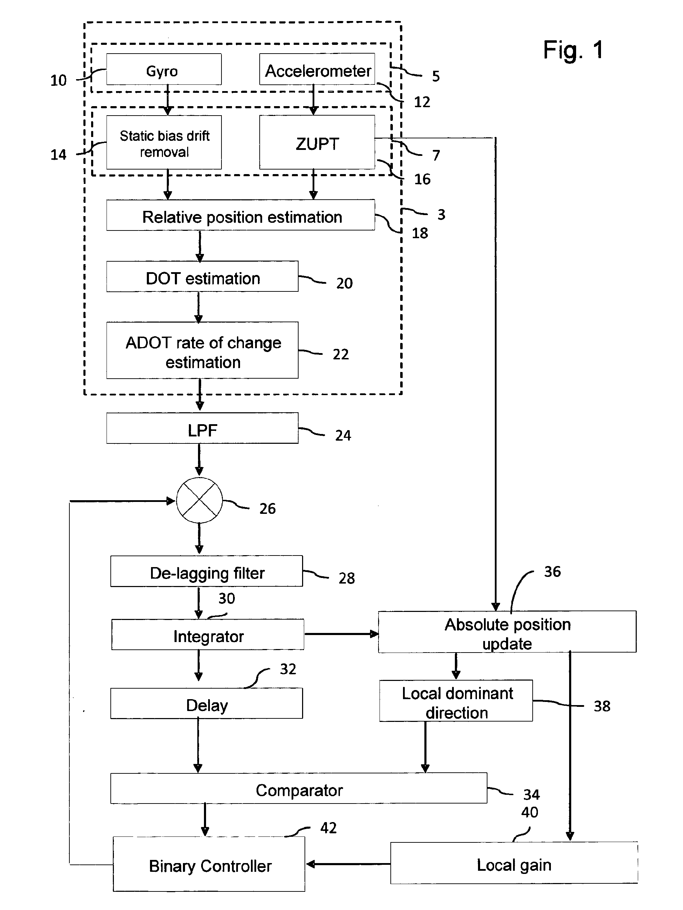

The invention will be explained in more detail with reference to the accompanying figure. Fig. 1 shows a block diagram of the method for determining a position of a tracking device according to the invention.

The method for determining a position of a tracking device is based on the known HDE algorithm which is, for example, disclosed in US 2011/0087450 A1 and whose content shall be part of the present description (incorporated by reference). In particular, the method according to the invention is based on the method disclosed in Fig. 9 of US 2011/0087450 A1.

"Heuristic drift elimination" (HDE) is able to reduce or eliminate the effects of all slow-changing gyro errors. It is able to, in real time, estimate and cancel out drift from a gyro's measured angular rate of rotation (also termed the rate of turn or turn rate herein).

HDE makes use of heuristic assumptions, namely the fact that many of the environments in which GPS and magnetometers are ineffective (e.g., inside manmade structures) have straight-line features. Straight-line features refers to these buildings as having walls, corridors, rooms, stairwells, ramps, etc. that are confined by linear structures, be it the outer walls of the building or the interior walls and structures within the space. Therefore, a first assumption for HDE is that this system operates in environments that have straight-line features, which makes sense because most corridors in buildings are straight and so are most walls and sidewalks alongside which a person might walk. And when outdoors, many sidewalks and streets are laid out in a straight-line manner. In any event, as a result of this heuristic assumption, at any moment, the likelihood is that a user is walking along a straight line, certainly when inside a building.

HDE systems improve the heading and direction of travel measurements determined from gyroscopic data. HDE applies two heuristic assumptions: (1) the assumption that motion happens along straight lines; and (2) that straight lines of motion relate to one another through only certain available angles of intersection (e.g., intersecting at 90 or 45 degrees).

Referring now to Fig. 1, a gyroscope 10 may be included within an inertial measurement unit ("IMU") 5 of an ADOT (Adjusted Direction of Travel) module 3, where the IMU 5 further includes an accelerometer 12. The gyroscope 10 may be a z-axis gyroscope. In another embodiment, the ADOT module 3 may include one or more additional gyroscopes (not shown in FIG. 1) in order to allow determinations of rates of rotation about the x and y axes. Additionally, in one embodiment, the accelerometer 12 may be an x-axis accelerometer. In another embodiment, the ADOT module 3 may include one or more additional accelerometers (not shown in FIG. 1) in order to allow determinations of acceleration about the y and z axes.

The ADOT module 3 may further include an inertial navigation system ("INS") 7 communicatively coupled to the IMU 5. The INS 7 calculates the position of the tracking device. The position is calculated based on the measured rate of rotation output from the gyroscope 10 and the measured acceleration output from the accelerometer 12. The output of the gyroscope 10 inherently includes drift errors, which are modeled as a static bias drift and a correctable error drift.

The INS 7 removes the static bias drift error. In particular, as shown in FIG. 1, the INS 7 may include a static bias drift removal module 14. The static bias drift removal module 14 may be, for example, a subtractor to remove the static bias drift error based on measurements taken prior to a travel (e.g. a walk). The output of the static bias drift removal module 14 is a normalized rate of rotation.

The INS 7 calculates the shoe heading by integrating the normalized rate of rotation. In particular, as shown in FIG. 1, the INS 7 may include a position estimation module 18 communicatively coupled to the static bias drift removal module 14 which, among other functions, may perform the integration.

The INS 7 may also include a "Zero Velocity Update" (ZUPT) module 16 as shown in FIG. 1. The ZUPT module 16 employs a ZUPT technique to eliminate drift from the output of the accelerometer 12. The ZUPT technique is based on the fact that during every footfall, when the ball of the foot is firmly on the ground, the velocity of the sole at that point is zero. The ZUPT module 16 may compute velocity along the z-axis based on the output of the accelerometer 12, and if the computed velocity is not equal to zero, then the accelerometer 12 must be wrong and the ZUPT module 16 can compute by how much the accelerometer 12 is erring. The ZUPT module 16 then provides the corrected output of the accelerometer 12 to the position estimation module 18.

The position estimation may then be performed according to known techniques. In particular, the position of the tracking device at footfall i may be expressed as a vector which is a function of: (1) a previous position; (2) acceleration parameters for each of the x, y, and z axes, respectively, at footfall i; and (3) attitude parameters for each of the x, y, and z axes, respectively, at footfall i. For example, the attitude parameter may be the calculated shoe heading with respect to the z-axis, and the attitude parameters may be calculated shoe headings with respect to the x-axis and the y-axis, as determined using the outputs of additional gyroscopes (not shown) of the IMU 5. Similarly, the acceleration parameter, as discussed above, may be the ZUPT-corrected acceleration of the tracking device along the z-axis, as determined from the output of the accelerometer 12. The acceleration parameters may be accelerations of the tracking device along the x-axis and y-axis, respectively, and may, in one embodiment, be ZUPT-corrected accelerations determined from the outputs of additional accelerometers (not shown) of the IMU 5.

After the position estimation module 18 has estimated the position at footfall i, the DOT estimation module 20 may estimate the direction of travel of the tracking device between footfall i-1 and footfall i. DOT stands for "direction of travel".

The DOT estimation module 20 may be communicatively coupled to an ADOT rate of change determination module 22 as illustrated in FIG. 1. ADOT stands for "adjusted direction of travel". The ADOT rate of change determination module 22 uses DOT to determine ADOT according to the constraints discussed above. Once the adjusted shoe heading has been determined, and ADOT 22 has been determined thereafter, the rate of change of ADOT may be determined.

The ADOT estimation module 22 may be communicatively coupled to a low pass filter LPF 24. An output of low pass filter LPF 24 is coupled to an adder 26 of a control loop. The filtered signal may be fed to an integrator 30. The numeric integrator 30 integrates its input signal to determine ADOT for i. This value is fed to a buffer 32 (delay). The buffer 32 is coupled to a comparator 34. The integrated value of integrator 30 which represents a drift corrected direction of travel is passed to an absolute position update module 36. Furthermore, the absolute position update module 36 is coupled to the ZUPT 16 for receiving the last estimated position, calculated by ZUPT 16.

The absolute position update module 36 calculates the absolute position of the tracking device based on the drift-corrected direction of travel and the last estimated position. The updated absolute position is used to look-up the local dominant direction and gain function by means of local dominant direction module 38 and local gain module 40. The gain function of gain module 40 represents the likelihood by which traveling/walking will occur along dominant directions in the current location.

The look-up is presented here as a generic block, which can be implemented in a variety of ways, such as for example, by a run-length encoded map of indexed domains. A position is decoded into an index, which in turn is a pointer into a storage, e.g. a table, that returns the local dominant directions and gain. This decoding is done by the local dominant direction module 38 and local gain module 40.

The local dominant directions are fed into the comparator 34 that selects the dominant direction that is closest (in terms of angular distance) to the drift corrected estimated direction of traveling/walking. The difference of the angular distance is fed to a binary controller 42 which is coupled to the adder 26. The binary controller 26 will either increment or decrement a corrective term in the next update (loop of calculation), depending on the sign of the angular difference. The sign here is associated with the sense of rotation (clockwise or counter clockwise). The size of the increment (or decrement) is set by the output of the gain lookup function. Locations near doors etc. where turns can be expected have a larger uncertainty in direction of walking and therefore will have a lower gain.

The HDE algorithm disclosed in US 2011/0087450 A1 is modified by adding the absolute position update module 36, the local dominant direction module 38 and local gain module 40 and the comparator 34, thereby improving the performance of the HDE algorithm.

The invention can be used by any application of indoor navigation. The method may be used for setting up a commercial service that enables the localisation of fire-fighters inside a so-called "non-cooperative environment". In such environment it cannot be assumed that there is an operational indoor navigation system, which is based on indoor transmitters for instance.

### LIST OF REFERENCE NUMERALS

- 3: ADOT module
- 5: inertial measurement unit IMU
- 7: inertial navigation system INS
- 10: gyroscope
- 12: accelerometer
- 14: static bias drift removal module
- 16: Zero Velocity Update module ZUPT
- 18: position estimation
- 20: DOT estimation module
- 22: ADOT range of estimation module
- 24: low pass filter LPF
- 26: adder
- 28: De-lagging filter
- 30: integrator
- 32: delay
- 34: comparator
- 36: absolute position update module
- 38: local dominant direction module
- 40: local gain module
- 42: binary controller

## Claims

1. A method for determining an indoor position of a tracking device, the method comprising:
- receiving measurements from a sensor assembly (10, 12) of the tracking device at a controller of the tracking device, the sensor assembly (10, 12) comprising a gyroscopic device (10) to measure a rate of rotation of the tracking device and an accelerometer (12) to measure an acceleration in at least one of perpendicular directions;
- determining, using the controller, an indication of a direction of travel of the tracking device based on the measurements from the sensor assembly (10, 12);
- supplying the indication of the direction of travel to a closed loop feedback control of the controller that is to remove a drift error from the indication of the direction of travel of the tracking device and that is to map the indication of the previous direction of travel onto one of a plurality of dominant directions to form a mapped indication of the previous direction of travel;
- an absolute position calculator (36) within the closed loop feedback control calculating an updated absolute position of the tracking device based on the drift corrected direction of the tracking device and a last estimated position based on the measurement of the accelerometer (12), wherein based on the updated absolute position a local dominant direction is looked-up;
- a comparator (34) within the closed loop feedback control selecting the dominant direction that is closest to the drift corrected indication of the direction of travel of the tracking device to form the mapped indication of the previous direction of travel;
- an accumulator (30) within the closed loop feedback control accumulating error values corresponding to a difference between the mapped indication of the previous direction of travel and a baseline direction of travel;
- the closed loop feedback control producing an integrator signal that counteracts the effects of drift error within the indication of the direction of travel, wherein the drift error is a normalized drift error that has had static drift error removed; and
- correcting the indication of the direction of travel by applying the integrator signal to the indication of the direction of travel to produce a corrected indication of the direction of travel.

2. The method according to claim 1, wherein the updated absolute position is used to look-up a gain function which represents a likelihood by which traveling along dominant directions in the current location will occur.

3. The method according to claim 1 or 2, wherein the comparator (34) selects the dominant direction that is closest in terms of angular distance to the drift corrected estimated direction of travel.

4. The method according to one of the preceding claims, wherein the comparator (34) calculates an angular difference between the estimated direction of travel and the selected dominant direction which is fed to a binary controller (42) which will increment or decrement a corrective term in a next loop, depending on the sign of the angular difference.

5. The method according to claim 4, wherein the size of the increment or decrement is set by the gain lookup function.

6. The method according to one of the preceding claims, wherein the local dominant direction is extracted from a run length encoded map of indexed domains.

7. The method according to claim 6, wherein a determined position is decoded into an index which in turn is a pointer into a storage that returns the local dominant directions.

8. The method according to claim 6 or 7, wherein a determined position is decoded into an index which in turn is a pointer into a storage that returns the gain.
